# EUROPEAN PATENT APPLICATION

(11) **EP 4 012 524 A1**
(43) Date of publication of application: **15.06.2022**
(21) Application number: 20850373.0
(22) Date of filing: 28.02.2020
(51) Int. Cl.: G05B 19/418, G06Q 50/04

(54) **DISPLAY CONTROL DEVICE, CONTROL METHOD, INFORMATION PROCESSING PROGRAM, AND RECORDING MEDIUM**

(30) Priority: 07.08.2019 JP 2019145457
(71) Applicant: OMRON Corporation, Shiokoji-dori, Shimogyo-Ku Kyoto-shi Kyoto 600-8530 (JP)
(72) Inventor: FUJIMOTO, Shinya, Kyoto-shi, Kyoto 600-8530 (JP)
(74) Representative: Becker Kurig & Partner Patentanwälte mbB
(86) International application number: PCT/JP2020/008508
(87) International publication number: WO 2021/024528

(57) **Abstract**

The present invention enables displaying a Gantt chart that is capable of displaying the implementation status of a work process for each order by a display method in which visibility is not compromised even when there are many orders. A Web server (10) causes display of a Gantt chart in which a block (Bl), representing a work time (Ot) required to complete each of a plurality of work processes (Pr) for each product (Ar), is marked with a color so as to make it possible to identify an order (Or) that includes the product (Ar).

## Description

### [Technical Field]

The present invention relates to a display control device causing a display device to display a Gantt chart indicating a work time required to complete each of a plurality of work processes for each product.

### [Background Art]

In the related art, attempts to ascertain and examine implantation statuses of work processes in production sites such as factories efficiently using Gantt charts are known. For example, the following Patent Literature 1 discloses a technology for connecting an ending time of the work in a certain process to a starting time of a work in a subsequent process with a line for display in a Gantt chart for managing a plurality of processes required to complete an ordered product.

### [Citation List]

### [Patent Literature]

[Patent Literature 1]
Japanese Patent Laid-Open No. 2009-37587

### [Summary of Invention]

### [Technical Problem]

In the above-described technology of the related art, however, when the number of ordered products to be completed increases, the number of lines connecting ending times with starting times increase, and thus there is a problem that visibility of a Gantt chart is compromised.

An aspect of the present invention has been devised in view of the foregoing problem and an objective of the present invention is to realize a display control device or the like displaying a Gantt chart capable of displaying an implementation status of a work process for each order by a display method in which visibility is not compromised even when there are many orders.

### [Solution to Problem]

To solve the foregoing problem, a display control device according to an aspect of the present invention is a display control device that causes a display device to display a Gantt chart indicating a work time required to complete each of a plurality of work processes for each product. The display control device includes: an identification part configured to identify each of a plurality of orders that each includes the same kind of one or more products; and a first display control part configured to mark a block representing the work time with a color with which the order including the product is identifiable and which is common to the plurality of work processes for the display device to display.

To solve the foregoing problem, a control method of a display control device according to another aspect of the present invention is a control method of a display control device that causes a display device to display a Gantt chart indicating a work time required to complete each of a plurality of work processes for each product. The control method includes: an identification step of identifying each of a plurality of orders that each includes the same kind of one or more products; and a first display control step of marking a block representing the work time with a color with which the order including the product is identifiable and which is common to the plurality of work processes for the display device to display.

### [Advantageous Effects of Invention]

According to an aspect of the present invention, it is possible to obtain the advantage of being able to display a Gantt chart capable of displaying an implementation status of a work process for each order by a display method in which visibility is not compromised even when there are many orders.

### [Brief Description of Drawings]

Fig. 1 is a block diagram illustrating a configuration of main parts of a display control device according to a first embodiment of the present invention.
Fig. 2 is a diagram illustrating an overview of a management system including the display control device in Fig. 1.
Fig. 3 is a diagram illustrating an image of basis captured data generated by a ceiling camera in Fig. 2.
Fig. 4 is a flowchart illustrating an overview of processes executed by the display control device in Fig. 1.
Fig. 5 is a flowchart illustrating an example of a Gantt chart displaying process executed by the display control device in Fig. 1.
Fig. 6 is a diagram illustrating an outline of a Gantt chart displayed by the display control device in Fig. 1.
Fig. 7 is a diagram illustrating a display image when a highlighting and displaying process for each order and a detailed information displaying process are executed.
Fig. 8 is a diagram illustrating an image of a process information list displayed by the display control device in Fig. 1.
Fig. 9 is a diagram illustrating a Gantt chart of the related art.

### [Description of Embodiments]

### [First embodiment]

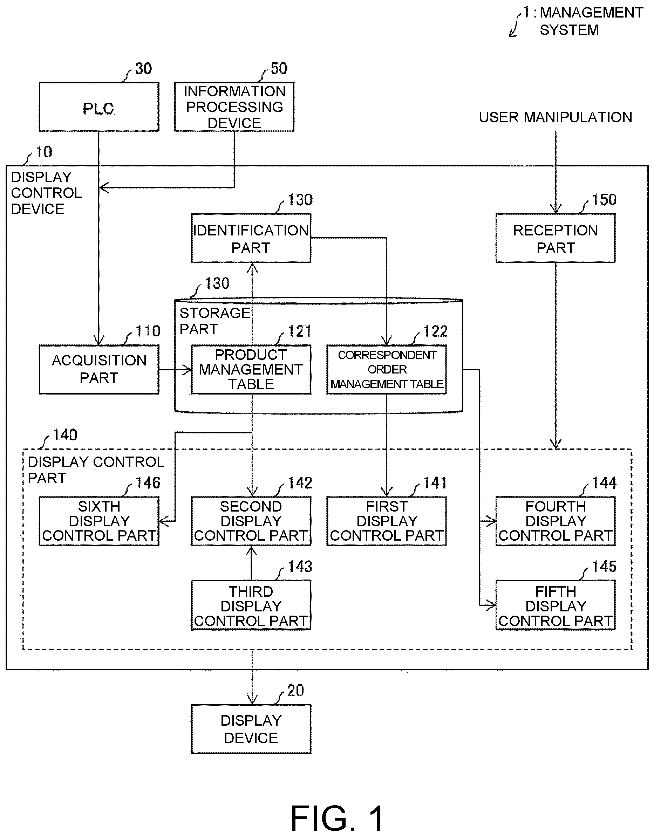

Hereinafter, an embodiment according to an aspect of the present invention (hereinafter referred to as a "present embodiment") will be described with reference to Figs. 1 to 9. The same reference numerals are given to the same parts or equivalent parts in the drawings and description thereof will not be repeated. In embodiments, for example, a Web server 10 is a general example of a display control device in description. In the following description, it is assumed that "N," "M," "n," and "m" express "an integer equal to or greater than 2" and "W," "X," "Y," "Z," "w," "x," "y," and "z" express "an integer equal to or greater than 1."

To facilitate understanding of the Web server 10 according to an aspect of the present invention, terms a "product," a "work process," an "order", a "work time," and the like will first be summarized.

### §1. Application example

### (Product and work process)

In a work site WS, which is a production site such as a factory, each kind of product Ar is almost completed (that is produced) through a plurality of work processes Pr. The product Ar is completed through, for example, work processes Pr(1), Pr(2), Pr(3), ..., Pr(n). Hereinafter, "work processes" are abbreviated to "processes" and the plurality of work processes Pr(1), Pr(2), Pr(3), ..., Pr(n) are, for example, a "painting" process, a "main work assembling" process, a process of "embedding a main work in a body," an "inspection" process, and the like.

When it is necessary to distinguish the plurality of work processes Pr from each other, suffixes such as "(1)," "(2)," "(3)," ..., "(n)" are appended to reference numerals to distinguish the work processes Pr. For example, "the work process Pr(1)," "the work process Pr(2)," "the work process Pr(3)," ..., "the work process Pr(n)" are written to distinguish the work processes from each other. When it is not necessary to particularly distinguish the plurality of work processes Pr from each other, the work processes are simply referred to as the "work process Pr."

### (Order)

For efficient management or the like of a product Ar, the product Ar in a work site WS is managed in units of "orders Or." The "order Or" is a "set of a predetermined number of the same kinds of products Ar" and the order Or includes a predetermined number of the same kinds of products Ar.

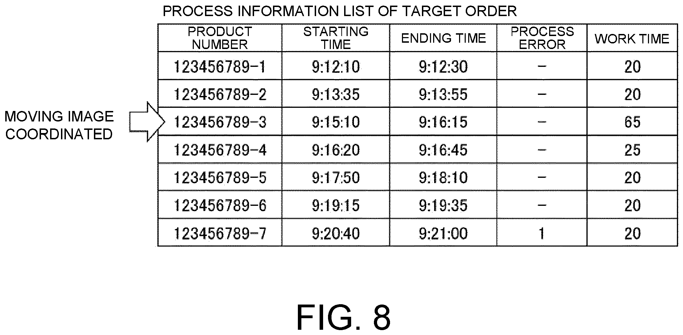

For example, as will be described below in detail, information useful for production management (also referred to as detailed information or "process information Pi") in each of seven products Ar from product numbers (identification information) "123456789-1" to "123456789-7" is illustrated in Fig. 8. The kinds of seven products Ar "123456789-1" to "123456789-7" are common to "123456789" and the set of the seven products Ar is an example of an "order Or."

### (Work)

In a work process Pr, a work Op is executed for at least one of a worker Pe and a device 40 and each of the plurality of works Op is associated with each of the plurality of work processes Pr. For example, in a work process Pr(1), a work Op(1) is executed by at least one of the worker Pe and the device 40. In a work process Pr(2), a work Op(2) is executed on at least one of the worker Pe and the device 40. Similarly, in a work process Pr(n), a work Op(n) is executed on at least one of the worker Pe and the device 40.

### (Relation between product, work process, and work)

As described above, for example, a product Ar(Y) is completed through n processes of work processes Pr(1), Pr(2), Pr(3), ..., Pr(n). Similarly, for example, a product Ar(Z) is completed through "m-1" processes of work processes Pr(2), Pr(3), Pr(4), ..., Pr(m).

Here, a plurality of work processes Pr required for completion is determined in advance for each a plurality of products Ar. One identical work process Pr is sometimes required to complete each of plurality of different kinds of products Ar. For example, "until kinds (a) of products Ar(Y) and kinds (b) of products Ar(Z) are completed, it is necessary to execute a work process Pr(x)" in some situations.

"A work Op(Y, x) executed on a product Ar(Y) in the work process Pr(x)" and "a work Op(Z, x) executed on a product Ar(Z) in the work process Pr(x)" may be identical or different.

In the embodiment, a work process Pr(x) stands for one of a plurality of work processes Pr required to complete a product Ar(Y) and a work Op(Y, x) stands for a work Op executed on the product Ar(Y) in the work process Pr(x).

### (Between work area and work time)

A work site WS includes a plurality of work areas Oa and each of the plurality of work processes Pr is associated with each of the plurality of work areas Oa. For example, a work OP(1) of a work process Pr(1) is executed in a work area Oa(1). That is, the work process Pr(1) is associated with the work area Oa(1). Further, a work OP(2) of a work process Pr(2) is executed in a work area Oa(2). That is, the work process Pr(2) is associated with the work area Oa(2). Similarly, a work OP(n) of a work process Pr(n) is executed in a work area Oa(n). That is, the work process Pr(n) is associated with the work area Oa(n).

Accordingly, a time "from a time at which a worker Pe starts a stay in a work area Oa (a stay starting time) to a time at which the stay in the work area Oa ends (a stay ending time)" can be considered to be "a work time Ot required to complete a work process Pr corresponding to the work area Oa." In particular, when it is assumed that "the worker Pe is executing a work OP while staying in the work area Oa," "a time from the stay starting time to the stay ending time of the worker Pe in the work area Oa" matches "a work time Ot required to complete the work process Pr corresponding to the work area Oa."

### (Between device and work time)

Each of the plurality of work processes Pr is associated with each of the plurality of devices 40. For example, a work OP(1) of the work process Pr(1) is executed using a device 40(1). That is, the work process Pr(1) is associated with the device 40(1). Further, a work OP(2) of the work process Pr(2) is executed using a device 40(2). That is, the work process Pr(2) is associated with the device 40(2). Similarly, a work OP(n) of the work process Pr(n) is executed using a device 40(n). That is, the work process Pr(n) is associated with the device 40(n).

Specifically, a device 40(x) corresponding to a work process Pr(x) executes a work Op(Y, x) on a product Ar(Y). Similarly, a device 40(w) corresponding to a work process Pr(w) executes a work Op(Z, w) on a product Ar(Z).

Accordingly, "a time from a starting time to an ending time of "a work Op executed by the device 40 corresponding to the work process Pr" in the work process Pr" on the product Ar can be considered to be "a work time Ot required to complete the work process Pr" for the product Ar.

In the embodiment, a work time Ot(Y, x) stands for a work time Ot required to complete the work process Pr(x) for the product Ar(Y), that is, the work time Ot(Y, x) stands for a time required to execute the work Op(Y, x).

### (Overview of management system 1)

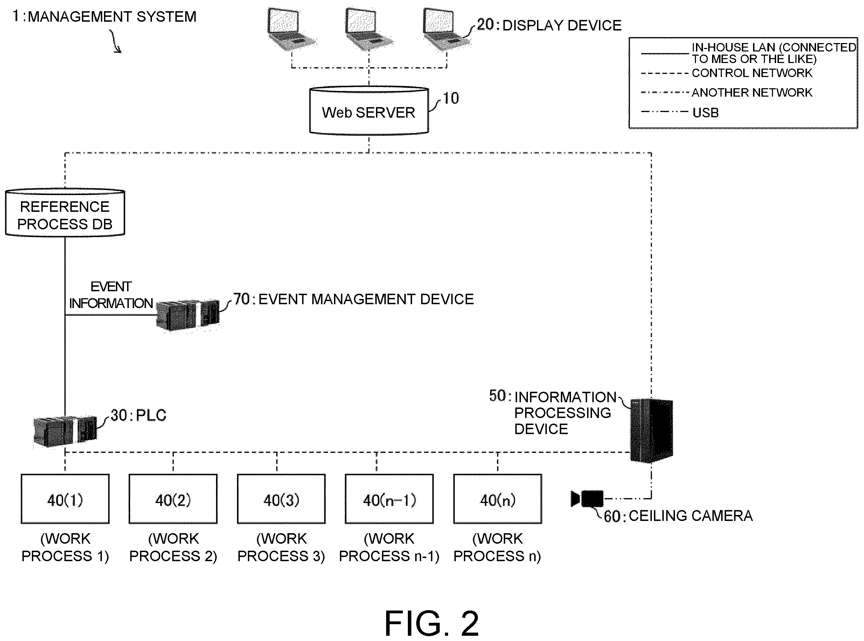

The management system 1 including the Web server 10 is a system that visualizes the process information Pi regarding each of a plurality of products Ar completed (produced) in the work site WS. In particular, the management system 1 displays a Gantt chart in which a block Bl representing "the work time Ot required to complete the work process Pr for the product Ar" is marked with "a color with which the order Or including the product Ar is identifiable." Hereinafter, an overview of the management system 1 will be described with reference to Fig. 2.

Fig. 2 is a diagram illustrating an overview of the management system 1 including the Web server 10. The management system 1 includes the Web server 10 and a display device 20. The management system 1 may further include at least one of a programmable logic controller (PLC) 30 and an information processing device 50 and may include a process information database (DB) and an event management device 70.

The display device 20 is a device that displays an image under the control of the Web server 10 and is implemented by a personal computer (PC) or the like. The display device 20 displays, for example, a Gantt chart and a moving image extracted from basis captured data BI or the like and implements visualization of the process information Pi under the control of the Web server 10. The Gantt chart which the Web server 10 causes the display device 20 to display has a vertical axis representing the work process Pr and a horizontal axis representing a time and expresses the work time Ot required to complete each of the plurality of work processes Pr for each product Ar using the blocks Bl. The block Bl is a rectangular frame surrounding a starting time and an ending time of "a work Op executed in a work process Pr for each product Ar" and represents "a work time Ot required to complete the work process Pr for each product Ar."

The Web server 10 is a display control device that controls the display device 20 such that a desired image is displayed on the display device 20. In particular, the Web server 10 is a display control device that causes the display device 20 to display a Gantt chart and a moving image or the like extracted from the basis captured data Bl.

The Web server 10 acquires the process information Pi for each work process Pr related to the product Ar from, for example, the process information DB or the like (more specifically, the PCL 30) and specifies "the work time Ot required to complete the work process Pr for each product Ar" using the acquired process information Pi. The Web server 10 may be connected to the information processing device 50 and may use the process information Pi acquired from the information processing device 50 to specify "the work time Ot required to complete the work process Pr for each product Ar."

The Web server 10 causes the display device 20 to display a Gantt chart which expresses "the work time Ot required to complete the work process Pr for each product Ar" using the blocks Bl and is specified using the acquired process information Pi. For example, the Web server 10 causes the display device 20 to display the Gantt chart expressing "the work time Ot(Y, x) required to complete the work process Pr(x) for the product Ar(Y)" using the block Bl(Y, x).

The Web server 10 acquires "the basis captured data BI generated by the ceiling camera 60" from the information processing device 50. The Web server 10 extracts part of the basis captured data BI acquired from the information processing device 50 as moving image data in response to a request from a user, reproduces the extracted moving image data, and causes the display device 20 to display a moving image desired by the user.

### (Process information DB and event management device)

In Fig. 2, the process information DB or the like also called an MES is connected to the Web server 10 via "another network" different from a control network and an in-house LAN. The process information DB is connected to "a master-slave control system in which the PLC 30 serves as a master and the devices 40 serves as slaves" via the in-house LAN. The PLC 30 stores the process information Pi regarding each of the plurality of products Ar in the process information DB.

In the example illustrated in Fig. 2, an event management device 70 that monitors and manages various events generated in the work site WS is connected to the process information DB serving as the MES via the in-house LAN. Here, it is not essential to connect the event management device 70 to the process information DB via the in-house LAN, and the event management device 70 may not be provided. An enterprise resources planning (ERP) or a warehouse management system (WMS) (neither of which is illustrated) may be connected to the in-house LAN in addition to an MES.

### (PLC and device)

The PLC 30 serves as a master in the master-slave control system in which the devices 40 serves as slaves, that is, a control device that controls the entire master-slave control system, and is connected to each of the plurality of devices 40 via a control network. The PLC 30 is called as a "master" in the sense that the PLC 30 manages data transmission via the control network. The "master" and the "slaves" are defined focusing on a control function of data transmission on the control network, and information transmitted and received between the devices is not particularly limited.

The PLC 30 acquires, for example, a measurement result or the like as input data from the device 40 which is an input device (a measurement device) such as a sensor and executes a calculation process using the acquired input data in accordance with a user program embedded in advance. The PLC 30 executes the calculation process, determines control content on the device 40 which is, for example, an output device such as an actuator, and outputs control data corresponding to the determined control content to the device 40 which is the output device. The PLC 30 repeats acquisition of input data from each of the plurality of devices 40 and output of control data to each of the plurality of devices 40 at a predetermined period (control period).

The devices 40 are used to execute the plurality of work processes Pr in the work site WS and is controlled by the PLC 30 serving as a line controller. In the management system 1, the devices 40 serve as slaves in the master-slave control system in which the PLC 30 serves as the master. The devices 40 are input devices that transmit input data to the PLC 30 repeatedly at a predetermined control period or are output devices that receive the control data from the PLC 30 and operate in accordance with the received control data repeatedly at the predetermined control period. Specifically, the devices 40 the devices 40 may be, for example, sensors which are input devices transmitting detection results or the like as input data to the PLC 30, may be barcode readers that transmit reading results or the like, or may be inspectors (testers) that transmit inspection results. The devices 40 may be programmable terminals (PTs) in which a plurality of input devices are connected. Further, the devices 40 may be robots or the like serving as output devices that execute screw fastening, picking, and the like.

That is, the PLC 30 produces the product Ar by controlling the entire master-slave control system. Specifically, the PLC 30 controls the devices 40 such that the devices 40 are caused to execute works Op required to complete the product Ar and the devices 40 are caused to execute the works Op, for example, in units of the orders Or.

The PLC 30 serving as the master in the master-slave control system outputs "the control data with which the devices 40 are caused to execute the works Op required to complete the product Ar" to the devices 40 serving as the slaves, for example, repeatedly at the predetermined control period.

The devices 40 receives the control data from the PLC 30 and execute the works Op required to complete the product Ar in accordance with the received control data, for example, repeatedly at the predetermined control period. As described above, each of the plurality of devices 40 corresponds to each of the plurality of work processes Pr required to complete the product Ar. The devices 40 transmits information indicating content and results or the like of the executed works Op (work information Oi) to the PLC 30, for example, repeatedly at the predetermined control period.

For example, the device 40(x) is associated with the work process Pr(x) which is one of the plurality of work processes Pr required to complete the product Ar(Y) and executes the work Op(Y, x). The device 40(x) transmits work information Oi(Y, x) indicating content and a result or the like of the executed work Op(Y, x) to the PLC 30, for example, repeatedly at the predetermined control period. The work information Oi(Y, x) may include information indicating whether an error has occurred when the work Op(Y, x) is executed.

The PLC 30 receives the work information Oi indicating the content and the result or the like of the work Op executed by the device 40 from the device 40 serving as a slave, for example, repeatedly at the predetermined control period. For example, the PLC 30 receives "the work information Oi(Y, x) indicating the content and the result or the like of the work Op(Y, x) executed for the product Ar(Y) by the device 40(x) in the work process Pr(x)" from the device 40(x) repeatedly at the control period.

For example, when the device 40(x) is an inspector, the PLC 30 acquires identification information and an inspection result of the product Ar(Y) which is a target of an inspection work which is a work Op(Y, x), a starting time and an ending time of the inspection work, and the like as the work information Oi(Y, x) from the device 40. When the device 40(x) is a robot executing screw fastening, the PLC 30 acquires "the starting time and the ending time of the work Op(Y, x) executed on the product Ar(Y) by the device 40(x), the identification information of the product Ar(Y), the number of screw fastenings, and the like as the work information Oi(Y, x).

The PLC 30 receives the work information Oi indicating the content and the result of the work Op actually executed by the device 40 in the work process Pr from the device 40 repeatedly at a predetermined period and transmits (that is, transfers) the received work information Oi as the process information Pi in the process information DB or the like. The PLC 30 transmits information generated using the work information Oi received from the device 40 repeatedly at the predetermined period, as the process information Pi to the process information DB or the like.

For example, the PLC 30 generates the following process information Pi in accordance with the work information Oi received from the device 40. That is, the PLC 30 generates a time at which the execution of the work Op by the device 40 corresponding to the work process Pr starts (a starting time), a time at which the execution of the work Op ends (an ending time), identification information of the product Ar which is a target of the work Op, and the process information Pi indicating whether an error has occurred when the work Op is executed. The PLC 30 transmits the generated process information Pi to the process information DB or the like.

The PLC 30 manages "the product Ar completed by causing the devices 40 to execute the works Op" in units of the orders Or and generates the process information Pi indicating the order Or including "the product Ar indicated by the work information Oi received from the devices 40." The PLC 30 transmits the generated process information Pi to the process information DB or the like.

Accordingly, the process information Pi(Y, x) generated by the PLC 30 based on the work information Oi(Y, x) received from the device 40(x) and transmitted to the process information DB or the like includes, for example, the following information. That is, the process information Pi(Y, x) includes the identification information of the product Ar(Y), the starting time and the ending time of the work Op(Y, x), whether an error has occurred, and the identification information of "the order Or including the product Ar(Y)" in the work process Pr(x) required to complete the product Ar(Y).

### (Information processing device and ceiling camera)

In Fig. 2, the information processing device 50 is connected to the Web server 10 via another network, and the basis captured data BI or the like transmitted from the information processing device 50 is stored in the Web server 10 or a moving image storage server (not illustrated) connected to the Web server 10.

The information processing device 50 is implemented by a PC or the like, acquires the basis captured data BI which is captured data obtained by imaging the entire work site WS from the ceiling camera 60, and stores and manages the acquired basis captured data BI. For example, the information processing device 50 transmits the basis captured data BI acquired from the ceiling camera 60 to the Web server 10 or the moving image storage server (not illustrated) connected to the Web server 10 and stores the basis captured data BI in the Web server 10 or the like.

The information processing device 50 may execute image analysis on the basis captured data BI acquired from the ceiling camera 60 and may specify a stay period Do of the worker Pe who is in the work area Oa corresponding to the work process Pr for each work process Pr.

Specifically, the information processing device 50 first executes image analysis on the basis captured data BI and determines whether the worker Pe is in the work site WS. When the information processing device 50 determines that the worker Pe is in the work site WS, the information processing device 50 specifies a worker ID of the worker Pe who is in the work site WS. Then, the information processing device 50 specifies a time at which it is checked that "a worker Pe(z) who has not been in the work area Oa(x) corresponding to the work process Pr(x) until then" is in the work area Oa(x) (= a stay starting time Tos(x, z)). The information processing device 50 specifies a time at which it is checked that the worker Pe(z) who has been in the work area Oa(x) until then is not in the work area Oa(x) (= a stay ending time Toe(x, z)). The information processing device 50 calculates a stay period Do(x, z) of the worker Pe(z) which is a period from the stay starting time Tos(x, z) to the stay ending time Toe(x, z) for the work process Pr(x), that is, in the work area Oa(x).

The information processing device 50 may notify the Web server 10 of information indicating the specified (calculated) stay starting time Tos, stay ending time Toe, and stay period Do of the worker Pe for each work process Pr, that is, each work area Oa, as the process information Pi.

The ceiling camera 60 is a wide-area imaging camera and is installed at a position at which the entire work site WS is overlooked. For example, one ceiling camera 60 is installed on the ceiling of the work site WS and generates the basis captured data BI which is captured data obtained by imaging the entire work site WS. The ceiling camera 60 outputs the generated basis captured data BI to the information processing device 50 via a communication cable which is, for example, a universal serial bus (USB) cable.

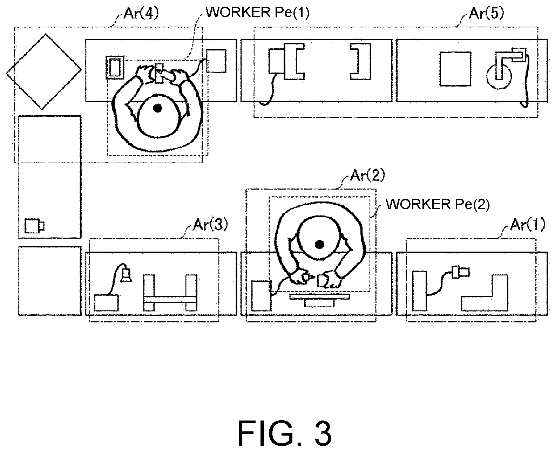

Fig. 3 is a diagram illustrating an image of the basis captured data BI generated by the ceiling camera 60. The information processing device 50 acquires the basis captured data BI exemplified in Fig. 3 from the ceiling camera 60. The information processing device 50 executes image analysis on the acquired basis captured data BI and specifies the stay period Do of the worker Pe on the work area Oa(x) corresponding to each of the plurality of work processes Pr.

### (Work time)

As described below with reference to Fig. 2, the Web server 10 acquires the process information Pi output by the PLC 30 from the process information DB or the like. Then, the Web server 10 specifies an operation time of the work Op executed by the device 40 in the work process Pr for each product Ar using the acquired process information Pi. The Web server 10 considers the operation time of the work Op specified for each product Ar to be "the work time Ot required to complete the work process Pr for each product Ar." For example, the Web server 10 acquires the process information Pi(Y, x) indicating the starting time and the ending time of the work Op(Y, x) executed by the device 40(x) corresponding to the work process Pr(x) in the work process Pr(x) required to complete the product Ar(Y) from the process information DB. The Web server 10 specifies the operation time of the work Op(Y, x) executed by the device 40(x) in the work process Pr(x) for the product Ar(Y) using the acquired process information Pi(Y, x). The Web server 10 considers the operation time of the work Op(Y, x) specified for the product Ar(Y) to be "the work time Ot(Y, x) required to complete the work process Pr(x)" of the product Ar(Y).

The Web server 10 may consider "the stay period Do of the worker Pe in the work area Oa corresponding to the work process Pr" to be "the work time Ot required to complete the work process Pr for each product Ar." For example, the Web server 10 specifies the stay period Do(x) of the worker Pe in the work area Oa(x) corresponding to the work process Pr(x) using the process information Pi(x) acquired from the information processing device 50. The Web server 10 may execute the following process when "the operation time of the work Op(Y, x) executed on the product Ar(Y) by the device 40(x) in the work process Pr(x)" is included in "the stay period Do(x) of the worker Pe in the work area Oa(x)." That is, the Web server 10 may consider "the stay period Do(x) of the worker Pe in the work area Oa(x)" overlapping "the operation time of the work Op(Y, x)" to be equal to "the work time Ot required to complete the work process Pr for each product Ar." That is, the Web server 10 may consider "the stay period Do(x) of the worker Pe in the work area Oa(x)" including the operation time of the work Op(Y, x) to be "the work period Ot(Y, x) required to complete the work process Pr(x)" of the product Ar(Y).

### (Other information related to implementation status)

The Web server 10 may acquire the process information Pi output by the PLC 30 from the process information DB or the like, specify "the work time Ot required to complete the work process Pr" for each product Ar, and further specify the following information from the process information Pi.

For example, the Web server 10 the Web server 10 specifies whether an error has occurred in the work Op(Y, x) executed by the device 40(x) corresponding to the work process Pr(x) in the work process Pr(x) required to complete the product Ar(Y) from the process information Pi(Y, x). Further, the Web server 10 specifies the identification information of the product Ar(Y) and the order Or including the product Ar(Y) from the process information Pi(Y, x).

### (Gantt chart)

The Web server 10 causes the display device 20 to display the Gantt chart which expresses "the work time Ot required to complete the work process Pr for each product Ar(Y)" using the blocks Bl and is acquired using the process information Pi. The Gantt chart which the Web server 10 causes the display device 20 to display is contrasted to a Gantt chart of the related art to facilitate understanding.

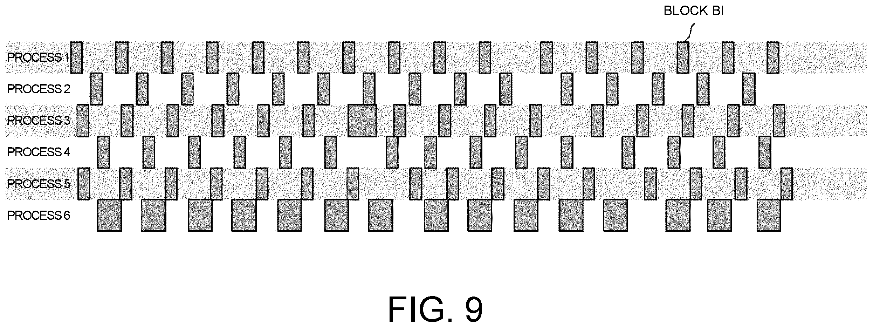

Fig. 9 is a diagram illustrating a Gantt chart of the related art. The Gantt chart of the related art also expresses "the work time Ot required to complete the work process Pr for the product Ar" using the blocks Bl.

Here, in the Gantt chart of the related art, as illustrated in Fig. 9, a plurality of blocks Bl is all displayed with the same color. Therefore, in the Gantt chart of the related art, it is difficult to ascertain an implementation status (specifically, the work time Ot) of each of the plurality of work processes Pr executed until completion of the product Ar and it is difficult to ascertain how each product Ar is completed. In the Gantt chart of the related art, the blocks Bl representing the work times Ot required to complete the work processes Pr for each of the plurality of products Ar are all marked with the same color. Therefore, it is difficult for a user to intuitively ascertain a cycle time, a tact time, a setup time, or the like. Further, it is difficult for the user to find the work process Pr which is subject to a bottleneck for each product Ar from the Gantt chart of the related art in which the plurality of blocks Bl is all displayed with the same color.

In the Gantt chart which the Web server 10 causes the display device 20 to display, however, the blocks Bl representing "the work times Ot required to complete the work processes Pr for each product Ar" are classified at a given period. Specifically, in the Gantt chart which the Web server 10 causes the display device 20 to display, each of the plurality of blocks Bl is marked with "a color with which the order Or including the product Ar is identifiable." In particular, the Web server 10 causes the display device 20 to display the Gantt chart in which each of the plurality of blocks Bl is marked with a color common to the plurality of work processes Pr, which is "a color with which the order Or including the product Ar is identifiable."

The Web server 10 causes the display device 20 to display the Gantt chart in which the color of the block Bl representing "the work time Or required to complete the work process Pr for each product Ar" is changed for "each order Or including the product Ar corresponding to the block Bl." That is, the Web server 10 classifies and visualizes "how each product Ar is completed" for each "order Or including the product Ar."

Accordingly, the user can intuitively ascertain an implementation status such as a setup time for each product Ar (more specifically, each order Or) in the Gantt chart which the Web server 10 causes the display device 20 to display. The user can easily find the work process Pr which is subject to a bottleneck for each product Ar, that is, can check, for example, the work process Pr in which the product Ar is staying at a glance in the Gantt chart which the Web server 10 causes the display device 20 to display.

In particular, when the work Op executed by the device 40 accompanies a manual work of the worker Pe and when many kinds of products Ar are produced in a small quantity, the Gantt chart in which the work times Ot are classified for each order Or enables the user to easily execute process management of the product Ar in units of orders.

### (Reproduction of moving image obtained by imaging implementation status)

The Web server 10 extracts and reproduces, from the basis captured data BI which is captured data obtained by imaging the entire work site WS, moving image data obtained by imaging an implementation status of each of the plurality of work processes Pr for the product Ar desired by the user until the product Ar is completed.

Accordingly, for example, when the user finds the product Ar to be concerned about from the Gantt chart which the Web server 10 causes the display device 20 to display, the user can display the moving image data on the Web server 10 until the product Ar is completed and can check the details of the moving image data.

### §2. Exemplary configuration

The overview of the management system 1 and the like has been described above with reference to Fig. 2. Before the details of the Web server 10 are described with reference to Fig. 1 and the like, the overview of the Web server 10 will be summarized as follows to facilitate understanding of the Web server 10.

That is, the Web server 10 (a display control device) is a display control device that causes the display device 20 to display the Gantt chart indicating the work time Ot required to complete each of the plurality of work processes Pr for each product Ar and includes an identification part 130 and a first display control part 141. The identification part 130 identifies the plurality of orders Or that each include the same kind of one or more products Ar. The first display control part 141 marks the block Bl representing the work time Ot required to complete each of the plurality of work processes Pr for each product Ar with a color with which the order Or including the product Ar is identifiable and which is common to the plurality of work processes Pr for the display device 20 to display.

In the foregoing configuration, the Web server 10 causes the display device 20 to display the Gantt chart in which the block Bl representing the work time Ot for each product Ar is marked with the color with which the order Or including the product Ar is identifiable and which is common to the plurality of work processes Pr.

The user can ascertain an implementation status of each order Or in the plurality of work processes Pr at a glance in the Gantt chart in which the work time Ot (the implementation status) of each product Ar is indicated with the color of each order Or which is common to the plurality of work processes Pr.

Accordingly, it is possible to obtain the advantageous effect that the Web server 10 can cause the display device 20 to display the Gantt chart capable of displaying the implementation status of the work process Pr for each order Or by a display method called classification in which visibility is not compromised even when there are many orders Or.

The Web server 10 further includes a second display control part 142 that causes the display device 20 to display the Gantt chart in which the plurality of blocks Bl marked with the color with which the order OR is identifiable are identifiable from each other.

In the foregoing configuration, the Web server 10 causes the display device 20 to display the Gantt chart in which the plurality of blocks Bl marked with the color with which the order Or is identifiable are identifiable from each other.

Accordingly, it is possible to obtain the advantageous effect that the Web server 10 can cause the display device to display the plurality of blocks Bl each representing the work time Ot of each product Ar in the Gantt chart in which the implementation statuses of the work processes Pr are classified for each order Or so that the blocks Bl are identifiable.

The Web server 10 further includes a third display control part 143 that executes one of the following two processes when there is a user manipulation of selecting the specific order Or(x) among the plurality of orders Or. That is, the third display control part 143 causes the display device 20 (A) to display only the Gantt chart related to the product Ar included in the specific order Or(x). The third display control part 143 causes the display device 20 (B) to highlight and display the Gantt chart related to the product Ar included in the specific order Or(x) with respect to the Gantt chart related to the product Ar included in the order Or other than the specific order Or(x).

In the foregoing configuration, the Web server 10 executes one of the following two processes when a user manipulation of selecting the specific order Or(x) is received. That is, the Web server 10 causes the display device 20 (A) to display only the Gantt chart related to the product Ar included in the specific order Or(x). The Web server 10 causes the display device 20 (B) to highlight and display the Gantt chart related to the product Ar included in the specific order Or(x) with respect to the Gantt chart related to the product Ar included in the order Or other than the specific order Or(x).

Accordingly, it is possible to obtain the advantageous effect that the Web server 10 causes the display device to display the Gantt chart indicating the work time Ot of each of the plurality of products Ar included in any order Or(x) desired by the user in a state in which the Gantt chart is distinguished from another Gantt chart with regard to that order Or(x).

The Web server 10 further includes a fourth display control part 144. The fourth display control part 144 executes the following process when there is a user manipulation of selecting a specific block Bl(Y, x) among the plurality of blocks Bl(x) in the specific work process Pr(x) selected by the user among the plurality of work processes Pr of the Gantt chart. That is, the fourth display control part 144 causes the display device 20 to display detailed information which is related to a designated product Ar(Y and which includes at least one of (A) a starting time and an ending time of the work time Ot(Y, x) represented by the specific block B1(Y, x), (B) information indicating whether an error has occurred in the work time Ot(Y, x) represented by the specific block Bl(Y, x), and (C) identification information for identifying the designated product Ar(Y) ) which is the product corresponding to the specific block Bl(Y, x).

In the foregoing configuration, the Web server 10 causes the display device 20 to display the detailed information related to the designated product Ar(Y) corresponding to the specific block Bl(Y, x) when there is a user manipulation of selecting the specific block Bl(Y, x) in the specific work process Pr(x) in the Gantt chart.

Here, the detailed information related to the designated product Ar(Y) includes at least one of the (A) the starting time and the ending time of the work time Ot(Y, x), (B) the information indicating whether an error has occurred in the work time Ot(Y, x), and (C) the identification information for identifying the designated product Ar(Y).

Accordingly, it is possible to obtain the advantageous effect that the Web server 10 causes the display device 20 to display the detailed information related to the product Ar(Y) corresponding to the block Bl(Y, x) with regard to any block Bl(Y, x) selected by the user in any work process Pr(x) selected by the user in response to a user manipulation.

The Web server 10 further includes a fifth display control part 145. The fifth display control part 145 executes the following process when there is a user manipulation of requesting display of additional information in a state in which the fourth display control part 144 displays the detailed information related to the designated product Ar(Y) on the display device 20. That is, the fifth display control part 145 causes the display device 20 to display the detailed information regarding each of one or more of the products Ar included in the order Or including the designated product Ar(Y) in a list format.

In the foregoing configuration, the Web server 10 causes the display device 20 to display the detailed information regarding of each of one or more of the products Ar included in the order Or including the designated product Ar(Y) in a list format when there is a user manipulation of requesting display of additional information.

Accordingly, it is possible to obtain the advantageous effect that the Web server 10 allows the user to be able to check the detailed information regarding "each of one or more of the products Ar included in the order Or including "the designated product Ar(Y) corresponding to the block Bl(Y, x) selected by the user"" at a glance.

The Web server 10 further includes a sixth display control part 146 that causes the display device 20 to highlight and display the block Bl representing the work time Ot at which an error has occurred in the Gantt chart.

In the foregoing configuration, the Web server 10 causes the display device 20 to highlight and display the block Bl representing the work time Ot at which an error has occurred in the Gantt chart.

Accordingly, it is possible to obtain the advantageous effect that the Web server 10 causes the display device to highlight and display the block Bl representing the work time Ot at which an error has occurred in the Gantt chart and allows "the user to able to check the work time Ot at which an error has occurred at a glance."

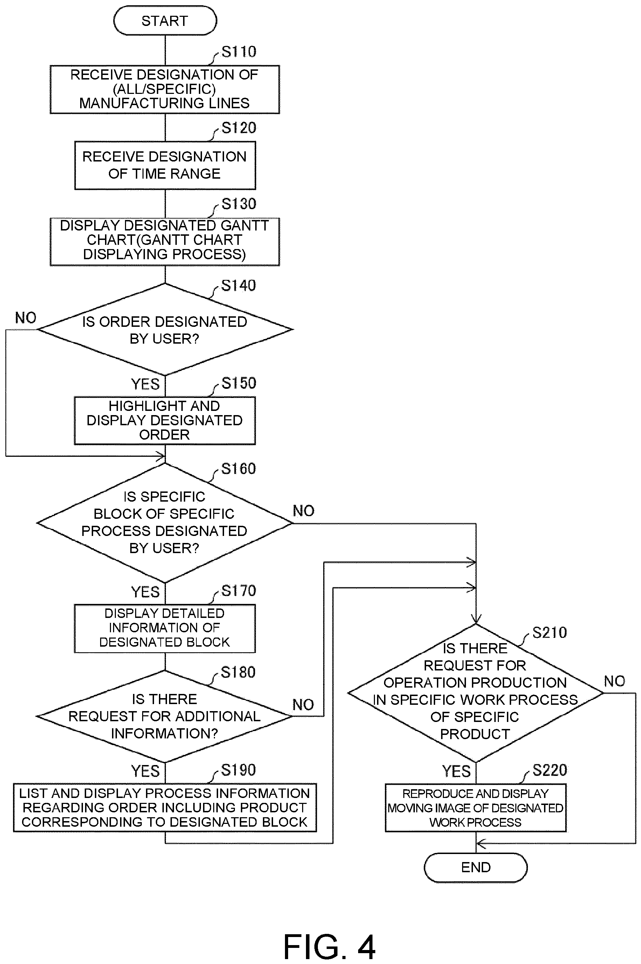

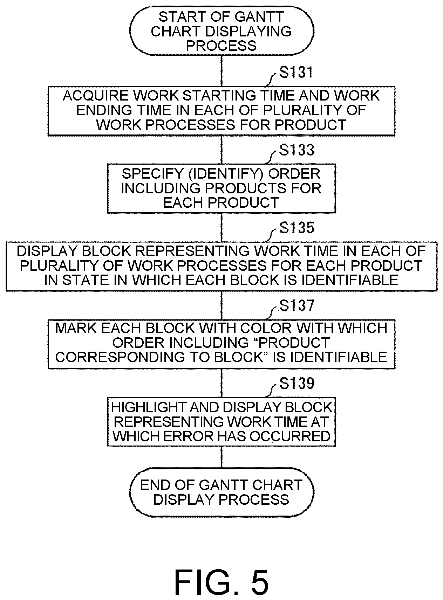

Next, the details of a configuration of the Web server 10 of which the overview has been described above will be described with reference to Fig. 1. Thereafter, processes executed by the Web server 10 will be described with reference to Figs. 4 and 5.

### (Details of display control device)

Fig. 1 is a block diagram illustrating a configuration of main parts such as the Web server 10 included in the management system 1. As illustrated in Fig. 1, the Web server 10 includes an acquisition part 110, a storage part 120, the identification part 130, a display control part 140, and a reception part 150 as functional blocks. The Web server 10 may include an extraction part that extracts moving image data obtained by imaging an implementation status of the work process Pr until completion of the specific product Ar desired by the user from the basis captured data BI in addition to the above-described functional blocks. However, to simplify description, configurations which are not directly related to the embodiment will not be described and are omitted from the block diagram. Here, depending on actual circumstance, the Web server 10 may have the omitted configuration.

For example, the acquisition part 110, the identification part 130, the display control part 140, and the reception part 150 can be realized by causing a central processing unit (CPU) or the like to read a program stored in a storage device (the storage part 120) configured as a read-only memory (ROM), a nonvolatile random access memory (NVRAM), or the like in a random access memory (RAM) (not illustrated) and execute the program. Hereinafter, the acquisition part 110, the identification part 130, the display control part 140, and the reception part 150 in the Web server 10 will be described.

The acquisition part 110 acquires the process information Pi output by the PLC 30 from the process information DB or the like, specifically, the process information Pi indicating the implementation status or the like in each of the plurality of work processes Pr of each of the plurality of products Ar. For example, the acquisition part 110 acquires the process information Pi(Y, x) of the product Ar(Y) related to the work process Pr(x). The acquisition part 110 stores the acquired process information Pi(Y, x) in a product management table 121 of the storage part 120. As described above, the process information Pi(Y, x) acquired from the process information DB or the like by the acquisition part 110 includes various kinds of information indicating the implementation status or the like of the work process Pr(x) of the product Ar(Y) and includes the following information.

That is, the process information Pi(Y, x) includes "a starting time and an ending time of the work Op(Y, x) executed on the product Ar(Y) by the device 40(x) corresponding to the work process Pr(x)." The process information Pi(Y, x) includes "information indicating whether an error has occurred in the work Op(Y, x) executed on the product Ar(Y) by the device 40(x) corresponding to the work process Pr(x)." Further, the process information Pi(Y, x) includes identification information of the product Ar(Y) and "identification information regarding the order Or including the product Ar(Y)."

The acquisition part 110 may acquire the process information Pi from the information processing device 50, specifically, the process information Pi(x) related to the work process Pr(x). The acquisition part 110 may store the acquired process information Pi(x) in the product management table 121 of the storage part 120. As described above, the process information Pi(x) acquired from the information processing device 50 by the acquisition part 110 includes information indicating a stay starting time Tos(x) and a stay ending time Toe(x) of the worker Pe in the work area Oa(x) corresponding to the work process Pr(x).

The acquisition part 110 further acquires the basis captured data BI from the information processing device 50 and stores the acquired basis captured data BI in a captured data table (not illustrated) of the storage part 120.

The identification part 130 identifies each of the plurality of orders Or, specifically, specifies the order Or including the product Ar with regard to each of the plurality of products Ar, and generates information indicating a correspondence relation between the product Ar and the order Or including that product Ar for each product Ar. "The information indicating the correspondent relation between the product Ar and the order Or including that product Ar" is also referred to as "correspondent order management information."

Specifically, the identification part 130 specifies "identification information of the order Or including the product Ar(Y)" with reference to the product management table 121 of the storage part 120 and generates the correspondent order management information in which the specified identification information of the order Or is associated with the identification information of the product Ar(Y).

The identification part 130 stores the generated correspondent order management information in a correspondent order management table 122 of the storage part 120.

The display control part 140 controls an image which the display device 20 is caused to display and includes a first display control part 141, a second display control part 142, a third display control part 143, a fourth display control part 144, a fifth display control part 145, and a sixth display control part 146.

The first display control part 141 marks each of "the plurality of blocks Bl expressed by the second display control part 142 in a state in which the blocks Bl can be identifiable from each other in the Gantt chart" with a color with which the order Or including the product Ar corresponding to the block Bl is identifiable for the display device 20 to display. That is, the first display control part 141 marks all the plurality of blocks Bl representing "the work times Ot in the plurality of work processes Pr required to complete the products Ar" with the color with which the order Or including the products Ar are identifiable from each other for the display device 20 to display.

For example, when the product Ar(Y) is completed through the plurality of work processes Pr(1), Pr(2), Pr(3), ..., Pr(n), the following information regarding the product Ar(Y) is indicated in the Gantt chart. That is, "the work times Ot of the product Ar(Y) in the work processes Pr(1), Pr(2), Pr(3), ..., Pr(n)" are respectively expressed as blocks Bl(Y, 1), Bl(Y, 2), Bl(Y, 3), ..., Bl(Y n) in the Gantt chart.

Here, the first display control part 141 marks all the blocks Bl(Y, 1), Bl(Y, 2), Bl(Y, 3), .., Bl(Y, n) with the same color with which "the order Or including the product Ar(Y)" is identifiable for the display device 20 to display.

The second display control part 142 specifies "the work time Ot required to complete the work process Pr for each product Ar" with reference to the product management table 121 of the storage part 120. Specifically, the second display control part 142 specifies the work time Ot(Y, x) of the product Ar(Y) required to complete the work process Pr(x) from the process information Pi(Y, x) stored in the product management table 121.

For example, when the product Ar(Y) is completed through the plurality of work processes Pr(1), Pr(2), Pr(3), ..., Pr(n), the second display control part 142 first acquires the following process information Pi with reference to the product management table 121. That is, the second display control part 142 acquires process information Pi(Y, 1), Pi(Y, 2), Pi(Y, 3), ..., Pi(Y, n) with reference to the product management table 121. The second display control part 142 ascertains a starting time and an ending time of each of works Op(Y, 1), Op(Y, 2), Op(Y, 3), .., Op(Y, n) from the process information Pi(Y, 1), Pi(Y, 2), Pi(Y, 3), ..., Pi(Y, n). The second display control part 142 specifies the work time Ot of the product Ar(Y) in each work process Pr from the starting time and the ending time of each of the works Op(Y, 1), Op(Y, 2), Op(Y, 3), ..., Op(Y, n). That is, the second display control part 142 specifies each of work times Ot(Y, 1), Ot(Y, 2), Ot(Y, 3), ..., Ot(Y, n) from the starting time and the ending time of each of the works Op(Y, 1), Op(Y, 2), Op(Y, 3), ..., Op(Y, n).

The second display control part 142 may consider "the stay period Do of the worker Pe in the work area Oa corresponding to the work process Pr" when "the work time Ot required to complete the work process Pr for each product Ar" is specified. For example, the second display control part 142 acquires the process information Pi output by the information processing device 50 with reference to the product management table 121. The second display control part 142 specifies the stay period Do(x) of the worker Pe in the work area Oa(x) corresponding to the work process Pr(x) from the process information Pi(x) output by the information processing device 50. The second display control part 142 may execute the following process when "the operation time of the work Op(Y, x) executed by the device 40(x) in the work process Pr(x) with regard to the product Ar(Y)" is included in "the stay period Do(x) of the worker Pe in the work area Oa(x)." That is, the second display control part 142 may specify "the stay period Do(x) of the worker Pe in the work area Oa(x)" overlapping in "the operation time of the work Op(Y x)" as "the work time Ot required to complete the work process Pr for each product Ar." That is, the second display control part 142 may specify "the stay period Do(x) of the worker Pe in the work area Oa(x)" including the operation time of the work Op(Y, x) as "the work time Ot(Y, x) required to complete the work process Pr(x)" for the product Ar(Y).

The second display control part 142 causes the display device 20 to display the Gantt chart in which the specified "work time Ot(Y, x) of the product Ar(Y) required to complete the work process Pr(x)" is expressed by the block Bl(Y, x). In particular, the second display control part 142 causes the display device 20 to display the Gantt chart in which the plurality of blocks Bl are expressed in a state in which each block is identifiable.

For example, the second display control part 142 causes the display device 20 to display the Gantt chart indicating "the work time Ot of each of the products Ar(1), Ar(2), Ar(3), ..., Ar(n) required to complete the work process Pr(x)" as follows. That is, the second display control part 142 expresses "the work time Ot of each of the products Ar(1), Ar(2), Ar(3), ..., Ar(n) in the work process Pr(x)" using the blocks Bl(1, x), Bl(2, x), Bl(3, x), ..., Bl(n, x). In particular, the second display control part 142 causes the display device 20 to display the Gantt chart in which the blocks Bl(1, x), Bl(2, x), Bl(3, x), ..., Bl(n, x) are expressed in a state in which each block is identifiable.

The third display control part 143 executes one of the following two processes on a specific order Or(z) notified of by the reception part 150. That is, the third display control part 143 causes the display device 20 to display only the Gantt chart indicating an implementation status of the product Ar included in the order Or(z). Alternatively, the third display control part 143 causes the display device 20 to highlight and display the Gantt chart indicating the implementation status of the product Ar included in the order Or(z) with respect to the Gannt chart indicating an implementation status of the product Ar included in the order Or other than the order Or(z).

Specifically, the third display control part 143 instructs the second display control part 142 to display only the Gantt chart indicating the implementation status of the product Ar included in the order Or(z) or highlight and display the Gantt chart indicating the implementation status of the product Ar included in the order Or(z).

First, the third display control part 143 specifies the product Ar included in the order Oz(z) with reference to the correspondent order management table 122. For example, the third display control part 143 specifies products Ar(z0), Ar(z1), Ar(z2), ... , Ar(zn) included in the order Or(z) with reference to the correspondent order management table 122. The third display control part 143 notifies the second display control part 142 of the specified products Ar(z0), Ar(z1), Ar(z2), ... , Ar(zn). The third display control part 143 instructs the second display control part 142 to display the Gantt chart indicating the implementation status of the specified products Ar or highlight and display the Gantt chart indicating the implementation status of the products Ar.

The fourth display control part 144 acquires detailed information regarding the product Ar(Y) corresponding to the specific block B1(Y, x) notified of by the reception part 150 with reference to the product management table 121 and causes the display device 20 to display the detailed information of the acquired product Ar(Y).

The detailed information of "the product Ar(Y) corresponding to the block Bl(Y, x) includes at least one of the following three pieces of information. That is, the detailed information of "the product Ar(Y) corresponding to the block B1(Y, x)" includes (A) information indicating a starting time and an ending time of the work time Ot(Y, x) corresponding to the block Bl(Y, x). The detailed information of "the product Ar(Y) corresponding to the block B1(Y, x)" includes (B) information indicating whether an error has occurred in the work time Ot(Y, x). Further, the detailed information of "the product Ar(Y) corresponding to the block B1(Y, x)" can include (C) identification information of the product Ar(Y).

The fifth display control part 145 executes the following process when the fact that "a user requests display of additional information regarding the specific block Bl(Y, x)" is notified of by the reception part 150. That is, the fifth display control part 145 causes the display device 20 to display detailed information regarding each of one or more products Ar included in the order Or including the product Ar(Y) corresponding to the block Bl(Y, x) in a list format.

For example, in response to the request for the additional information related to a block B1(Y0, x), the fifth display control part 145 first specifies the order Or(Y) including a product Ar(Y0) corresponding to the block Bl(Y0, x) with reference to the correspondent order management table 122. The fifth display control part 145 further specifies the products Ar(Y0), Ar(Y1), Ar(Y2), ..., Ar(Yn) included in the order Or(Y) with reference to the correspondent order management table 122. The fifth display control part 145 acquires the detailed information regarding each of the products Ar(Y0), Ar(Y1), Ar(Y2), ..., Ar(Yn) with reference to the product management table 121. The fifth display control part 145 causes the display device 20 to display the acquired "detailed information regarding each of the products Ar(Y0), Ar(Y1), Ar(Y2), ..., Ar(Yn)" in a list format.

The sixth display control part 146 specifies the operation time Ot at which an error has occurred with reference to the product management table 121 and causes the display device 20 to display the Gantt chart in which the block Bl representing the specified "operation time Ot at which an error has occurred" is highlighted.

The reception part 150 receives a user manipulation and notifies the display control part 140 of content of the received user manipulation. For example, when a user manipulation of "selecting the specific order Or(z) in the Gantt chart displayed on the display device 20" is received, the reception part 150 notifies the third display control part 143 of the selected specific order Or(z). For example, when a user manipulation of "selecting the specific block Bl(Y, x) in the Gantt chart displayed on the display device 20" is received, the reception part 150 notifies the fourth display control part 144 of the selected specific block Bl(Y, x). Further, for example, when a user manipulation of "requesting display of additional information in the specific block Bl(Y, x)" is received, the reception part 150 notifies the fifth display control part 145 that the reception of the user manipulation is received.

The storage part 120 is a storage device that stores various kinds of data used by the Web server 10. The storage part 120 may non-transitorily store (1) a control program executed by the Web server 10, (2) an OS program, (3) an application program for executing various functions of the Web server 10, and (4) various kinds of data read when the application program is executed. The (1) to (4) pieces of data are stored in, for example, a nonvolatile storage device such as a read-only memory (ROM), a flash memory, an erasable programmable ROM (EPROM), an electrically EPROM (EEPROM: registered trademark), or a hard disc drive (HDD). The Web server 10 may include a nonvolatile storage part (not illustrated). The nonvolatile storage part is a so-called working memory that temporarily stores data, calculation results, and the like used for calculation during variation processes executed by the Web server 10 and is configured as a volatile storage device such as a random access memory (RAM). Data and a storage device that stores the data are appropriately determined from a usage purpose, convenience, cost, a physical restriction, or the like of the Web server 10. The storage part 120 further stores the product management table 121 and the correspondent order management table 122.

The process information Pi output from the PLC 30 to the process information DB and acquired from the process information DB by the acquisition part 110 is stored in the product management table 121. Specifically, the process information Pi indicating an implementation status or the like in the plurality of work processes Pr of the plurality of products Ar is stored in the product management table 121.

The process information Pi(Y, x) related to the work process Pr(x) of the product Ar(Y) includes a starting time and an ending time of the work Op(Y, x) executed in the work process Pr(x) and information indicating whether an error has occurred in the work Op(Y, x). The process information Pi(Y, x) related to the work process Pr(x) of the product Ar(Y) further includes identification information of the product Ar(Y) and identification information of "the order Or including the product Ar(Y)." The process information Pi acquired from the information processing device 50 by the acquisition part 110 may further be stored in the product management table 121.

The identification part 130 stores "the correspondent order management information indicating a correspondent relation between the product Ar and the order Or including the product Ar" in each of the plurality of products Ar in the correspondent order management table 122.

### §3. Operation example

### (Overview of process)

Fig. 4 is a flowchart illustrating an overview of processes executed by the Web server 10. The processes executed by the Web server 10 (in particular, the display control part 140) are broadly classified into "a Gantt chart displaying process," "a highlighting and displaying process for each order," "a detailed information displaying process," "a list information displaying process," and "a moving image displaying process." The processes will be described below.

### (Gantt chart displaying process)

The reception part 150 receives a user manipulation of designating "all (all the manufacturing lines)" or "specific manufacturing lines" in the manufacturing lines (S 110). When a plurality of manufacturing lines are in the work site WS, a user may designate "specific manufacturing lines" in the Web server 10 and give an instruction to display the Gantt chart for the work process Pr included in the designated manufacturing line. When the number of work processes Pr is large, the user may select a combination of the specific work processes Pr as a manufacturing line and instructs the Web server 10 to display the Gantt chart for the work processes Pr included in the selected manufacturing line.

The reception part 150 receives a user manipulation of designating a time range in the displayed Gantt chart (S120). Normally, a "date and time" is designated in the time range. When more detailed checking is desired for a work situation, the user designates a "time," that is, a "time range" and instructs the Web server 10 to display the Gantt chart in the designated time range.

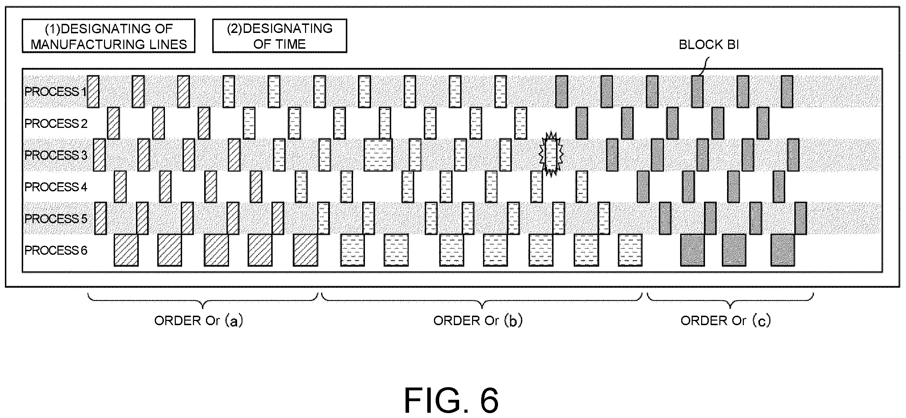

The display control part 140 causes the display device 20 to display the Gantt chart which satisfies the conditions designated in S110 and S120, that is, executes "the Gantt chart displaying process" (S130). As the details of "the Gantt chart displaying process" executed by the display control part 140 are described below with reference to Fig. 5, an image of the Gantt chart which the Web server 10 causes the display device 20 to display will be described with reference to Fig. 6.

Fig. 6 is a diagram illustrating an outline of the Gantt chart which the Web server 10 causes the display device 20 to display. As illustrated in Fig. 6, the second display control part 142 causes the display device 20 to display the Gantt chart in which the plurality of blocks Bl representing "the work time Ot required to complete the work process Pr for each product Ar" are expressed in a state in which each of the plurality of blocks Bl is identifiable. For example, in the Gantt chart exemplified in Fig. 6, sixteen blocks Bl are displayed in each block is distinguished from each other in "process 1 (the work process Pr(1))." Each of the sixteen blocks Bl in process 1 represents, for example, the work time Ot required to complete the work process Pr(1) in each of the products Ar(1) to Ar(16).

In the Gantt chart exemplified in Fig. 6, the plurality of blocks B1 is each marked with a color with which the order Or including the corresponding product Ar is identifiable. For example, the first to third blocks Bl in processes 1 and 2, the first to fourth blocks Bl in processes 3 and 4, and the first to fifth blocks Bl in processes 5 and 6 are marked with the same color with which an order Or(a) is identifiable. This means that the products Ar corresponding to the blocks B1 are all included in the order Or(a).

The fourth to tenth blocks Bl in processes 1 and 2, the fifth to eleventh blocks Bl in processes 3 and 4, and the sixth to twelfth blocks Bl in processes 5 and 6 are marked with the same color with which an order Or(b) is identifiable. This means that the products Ar corresponding to the blocks B1 are all included in the order Or(b).

Similarly, the eleventh and later blocks Bl in processes 1 and 2, the twelfth and later blocks Bl in processes 3 and 4, and the thirteenth and later blocks Bl in processes 5 and 6 are marked with the same color with which an order Or(b) is identifiable. This means that the products Ar corresponding to the blocks B1 are all included in the order Or(c).

That is, the first display control part 141 marks each of "the plurality of blocks Bl expressed to be identifiable in the Gantt chart" with the color which is common to the plurality of work processes Pr and with which the order Or including the products Ar corresponding to the blocks Bl is identifiable to display the Gantt chart.

### (Highlighting and displaying process for each order)

The reception part 150 determines "whether a user designates the order Or" (S140). When the reception part 150 receives the user manipulation of designating the order Or(x) (Yes in S140), the third display control part 143 executes the following process. That is, the third display control part 143 causes the display device to highlight and display the Gantt chart of the designated order Or(x) or display only the Gantt chart of the designated order Or(x) (S150).

### (Detailed information displaying process)

The reception part 150 determines "whether the specific block Bl(Y, x) of the specific work process Pr(x) is designated by the user" (S160). When the reception part 150 receives the user manipulation of designating the specific block Bl(Y, x) (Yes in S160), the fourth display control part 144 executes the following process. That is, the fourth display control part 144 causes the display device to display the detailed information of the product Ar(Y) corresponding to the block Bl(Y, x) (S170).

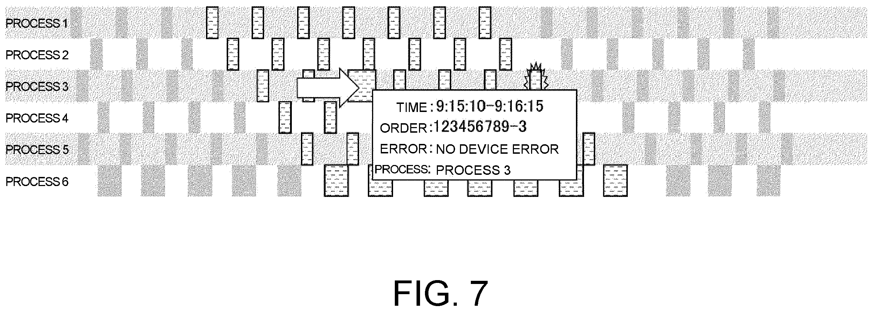

Fig. 7 is a diagram illustrating a display image when the highlighting and display process for each order and the detailed information displaying process are executed. Compared to the Gantt chart exemplified in Fig. 6, the Gantt chart of the order Or(b) (that is, the Gantt chart indicating an implementation status of the products Ar included in the Or(b)) is highlighted and displayed in Fig. 7. Specifically, only the Gantt chart of the order Or(b) is highlighted and displayed. The Gannt chart of the orders Or(a) and Or(c) are not highlighted and displayed.

In the Gannt chart exemplified in Fig. 6, when there is a user manipulation of "selecting the order Or(b)," the third display control part 143 executes the following process. That is, the third display control part 143 highlights the Gannt chart of the order Or(b) with respect to the Gantt chart of the orders Or(a) and Or(c) and causes the display device 20 to display the Gantt chart, as illustrated in Fig. 7.

In Fig. 7, detailed information of a product Ar(6) corresponding to the sixth block Bl(6, 3) of process 3 (the work process Pr(3)) is further superimposed and displayed in the Gantt chart. That is, for the product Ar(6) corresponding to the block Bl(6, 3), the operation time Ot required to complete the work process Pr(3) is a time from "9:15:10" to "9:16:15." Identification information of the product Ar(6) corresponding to the block Bl(6, 3) is "123456789-3." Here, as identification information of "the order Or(b) including the product Ar(6) corresponding to the block Bl(6, 3), detailed information "123456789" is also read. Further, for the product Ar(6) corresponding to the block Bl(6, 3), "the detailed information displayed now is information indicating an implementation status of process 3 (the work process Pr(3))" and "a device error has not occurred" in the work process Pr(3) are indicated.

### (List information displaying process)

The reception part 150 determines "whether additional information is requested from the user" (S180). When the reception part 150 receives a user manipulation of requesting the additional information regarding the specific block Bl(Y, x) (Yes in S180), the fifth display control part 145 executes the following process. That is, the fifth display control part 145 lists and displays the process information regarding the order Or including the product Ar(Y) corresponding to the block Bl(Y, x) (S190). Specifically, the fifth display control part 145 causes the display device 20 to display the detailed information regarding each of one or more products Ar included in the order Or including the product Ar(Y) corresponding to the block Bl(Y, x) in a list format.

Fig. 8 is a diagram illustrating an image of a process information list which the Web server 10 (in particular, the fifth display control part 145) causes the display device 20 to display. When a user manipulation (for example, a click) of requesting additional information is received in a state in which the image exemplified in Fig. 7 is displayed, the fifth display control part 145 causes the display device 20 to display the process information list exemplified in Fig. 8.

As described above, the detailed information regarding the product Ar(6) corresponding to the sixth block Bl(6, 3) of process 3 (the work process Pr(3)) is displayed in Fig. 7. That is, the detailed information indicating that "the identification information regarding the product Ar(6) corresponding to the block Bl(6, 3) is "123456789-3"" is displayed. The detailed information indicating that "the product Ar(6) corresponding to the block Bl(6,3) is included in the order Or(b) with the identification information "123456789"" is displayed.

Accordingly, the fifth display control part 145 causes the display device 20 to display the detailed information regarding the product Ar included in "the order Or(b) with the identification information "123456789"" as the additional information regarding the product Ar with the identification information "123456789-3" in the list format.

Specifically, the fifth display control part 145 first specifies the products Ar which is included in the order Or(b)" and have the identification information from "123456789-1" to "123456789-7" with reference to the correspondent order management table 122. Subsequently, the fifth display control part 145 acquires the detailed information indicating the implementation status of the work process Pr(3) for each of the seven products Ar with the identification information from "123456789-1" to "123456789-7" with reference to the product management table 121. Then, the fifth display control part 145 causes the display device to display the acquired "detailed information indicating the implementation status of the work process Pr(3) for each of the seven products Ar with the identification information from "123456789-1" to "123456789-7"" in the list format, as exemplified in Fig. 8.

In the first stage of the process information list exemplified in Fig. 8, the following information indicating the implementation status of the work process Pr(3) with regard to the product Ar with the identification information "123456789-1" is displayed. The information indicating that an error has not occurred during the work time Ot required to complete the work process Pr(3) of the product Ar with the identification information "123456789-1" is from "9:12:10" to "9:12:30," that is, "20" is indicated

In the second stage of the process information list exemplified in Fig. 8, the following information indicating the implementation status of the work process Pr(3) with regard to the product Ar with the identification information "123456789-2" is displayed. The information indicating that an error has not occurred during the work time Ot required to complete the work process Pr(3) of the product Ar with the identification information "123456789-2" is from "9:13:35" to "9:13:55," that is, "20" is indicated.

Similarly, in the seventh stage of the process information list exemplified in Fig. 8, the following information indicating the implementation status of the work process Pr(3) with regard to the product Ar with the identification information "123456789-7" is displayed. The information indicating that an error has occurred during the work time Ot required to complete the work process Pr(3) of the product Ar with the identification information "123456789-7" is from "9:20:40" to "9:21:00," that is, "20" is indicated.

### (Moving image displaying process)

The reception part 150 determines "whether there is a request for operation reproduction of the specific work process Pr(x) of the specific product Ar(Y) from a user" (S210). When the reception part 150 receives "the request for operation reproduction of the specific work process Pr(x) of the specific product Ar(Y)" (Yes in S210), the display control part 140 executes the following process. That is, the display control part 140 extracts moving image data obtained by imaging the implementation status of the specific work process Pr(x) of the product Ar(Y) from the basis captured data BI of the captured image table and causes the display device 20 to display the extracted moving image data (S220).

For example, when there is a user manipulation of requesting operation reproduction in the implementation status of the work process Pr(3) for the product Ar with the identification information "123456789-3" in the third stage of the process information list exemplified in Fig. 8, the display control part 140 executes the following process. That is, the display control part 140 extracts the moving image data of the product Ar with the identification information "123456789-3" from "9:15:10" to "9:16:15" which is the work time Ot required to complete the work process Pr(3) from the basis captured data BI. The display control part 140 causes the display device 20 to display the moving image data from "9:15:10" to "9:16:15" extracted from the basis captured data BI.

### (Details of Gantt chart displaying process)

Fig. 5 is a flowchart illustrating an example of the "Gantt chart displaying process" executed by the Web server 10. The second display control part 142 acquires a starting time and an ending time of the work Op in each of the plurality of work processes Pr for the product Ar with reference to the product management table 121 (S131). The first display control part 141 specifies the order Or including the products Ar, that is, identifies each of the plurality of orders Or, for the plurality of products Ar (S133).

The second display control part 142 causes the display device to display the block Bl representing the work time Ot in each of the plurality of work processes Pr for each product Ar in a state in which each of the plurality of blocks Bl is identifiable (S135). The first display control part 141 marks each of "the plurality of blocks Bl expressed by the second display control part 142 in a state in which the blocks Bl are identifiable from each other" with the color with which the order Or including "the product Ar corresponding to the block Bl" is identifiable and causes the display device to the Gantt chart (S 137). The sixth display control part 146 highlights and displays the block Bl representing the work time Ot at which an error has occurred (S139). In the Gantt chart exemplified in Fig. 6, the eleventh block Bl(11, 3) of "process 3 (the work process Pr(3)) is blinked and displayed. This indicates that the error has occurred at the work time Ot(11, 3) corresponding to the blinked and displayed block B1(11, 3).

### (Summary of Gantt chart displaying process)

The Gantt chart displaying process executed by the Web server 10 (in other words, the control method of the Web server 10) described above with reference to Fig. 5 can be summarized as follows. That is, the control method of the Web server 10 is a control method of the display control device causing the display device 20 to display the Gantt chart indicating the work time Ot required to complete each of the plurality of work processes Pr for each product Ar. The control method of the Web server 10 includes the identification step (S133) and the first display control step (S137). In the identification step, each of the plurality of orders Or including the same kind of one or more products Ar is identified. Specifically, the order Or including the product Ar(Y) is specified for the product Ar(Y) corresponding to the block Bl(Y, x) displayed in the Gantt chart.

In the first display control step, the block Bl representing "the work time Ot required to complete the work process Pr for each product Ar" is marked with the color with which the order OR including the product Ar is identifiable and which is common to the plurality of work processes Pr for the display device 20 to display. Specifically, in the first display control step, the block Bl(Y, x) is marked with the color with which "the order OR including the product Ar corresponding to the block Bl(Y, x)" is identifiable and which is common to the plurality of work processes Pr for the display device 20 to display. That is, in the first display control step, the plurality of block Bl(Y) representing the work times Ot in the plurality of work processes Pr required to complete the products Ar(Y) is all marked with the color with which the order Or including the products Ar(Y) is identifiable.

In the foregoing configuration, according to the control method of the Web server 10, the block Bl representing the work time Ot for each product Ar is marked with the color with which the order Or including the product Ar is identifiable and which is common to the plurality of work processes Pr and the display device 20 is caused to display the Gantt chart.

The user can ascertain the implementation status of each order Or in the plurality of work processes Pr at a glance in the Gantt chart in which the work time Ot (the implementation status) of each product Ar is indicated with the color of each order Or which is common to the plurality of work processes Pr.

Accordingly, according to the control method of the Web server 10, it is possible to obtain the advantageous effect that the display device 20 can be caused to display the Gantt chart capable of displaying the implementation status of the work process Pr for each order Or by the display method called classification in which visibility is not compromised even when there are many orders Or.

### §4. Modified examples

The example in which the display control device according to an aspect of the present invention is implemented by the Web server 10 has been described above, the display control device may not be essentially implemented by the Web server and may be implemented by a personal computer (PC) or the like. For example, the acquisition part 110, the identification part 130, the display control part 140, and the reception part 150 may be implemented by software using a central processing unit (CPU) of the PC. Here, the display control device according to the aspect of the present invention may be implemented by a Web server in consideration of loads applied on the display control device according to the aspect of the present invention and various databases (DBs) such as moving image storage servers (not illustrated) connected to the display control device.

The example in which the Web server 10 is implemented as a device distinguished from the process information DB and the information processing device 50 in the management system 1 exemplified in Fig. 2 has been described above. However, the Web server 10 may be implemented with at least one or a combination of the process information DB and the information processing device 50.

The display control device according to an aspect of the present invention may mark the plurality of blocks Bl representing "the work times Ot required to complete the plurality of work processes Pr for each product Ar" with the color with which the order Or including the products Ar is identifiable to display the Gannt chart. A device that implements the display control device according to the aspect of the present invention is not particularly limited.

### [Implemented examples by software]

The functional blocks (specifically, the acquisition part 110, the identification part 130, the display control part 140, and the reception part 150) of the Web server 10 may be implemented by logical circuits (hardware) formed on an integrated circuit (an IC chip) or may be implemented by software using a central processing unit (CPU).

In the latter case, the Web server 10 includes a CPU that executes a command of a program which is software realizing each function and a read-only memory (ROM) or a storage device (which is referred to as a "recording medium") in which the program and various kinds of data can be recorded by a computer (or the CPU), and a random access memory (RAM) on which the program is loaded. The computer (or the CPU) reads the program from the recording medium and executes the program to achieve the objective of the present invention. As the recording medium, a "non-transitory medium," for example, a tape, a disc, a card, a semiconductor memory, a programmable logical circuit, or the like can be used. The program may be supplied to the computer via any transmission medium (a communication network, broadcast waves, or the like) capable of transmitting the program. The present invention can also be implemented in a form of a data signal in which the program is embodied through electronic transmission and which is embedded in broadcast waves.

### (Supplements)

A display control device according to an aspect of the present invention is a display control device that causes a display device to display a Gantt chart indicating a work time required to complete each of a plurality of work processes for each product. The display control device includes: an identification part configured to identify each of a plurality of orders that each includes the same kind of one or more products; and a first display control part configured to mark a block representing the work time with a color with which the order including the product is identifiable and which is common to the plurality of work processes for the display device to display.

In the foregoing configuration, the display control device marks a block representing the work time of each product with a color with which the order including the product is identifiable and which is common to the plurality of work processes and causes the display device to display the Gantt chart.

The user can ascertain an implementation status of each order in the plurality of work processes at a glance in the Gantt chart in which the work time (the implementation status) of each product is indicated with the color of each order which is common to the plurality of work processes.

Accordingly, it is possible to obtain the advantageous effect that the display control device can cause the display device to display the Gantt chart capable of displaying the implementation status of the work process by a display method called classification in which visibility is not compromised even when there are many orders.

The display control device according to the aspect of the present invention may further include a second display control part configured to cause the display device to display the Gantt chart in which a plurality of blocks marked with the color with which the order is identifiable are identifiable from each other in the Gantt chart.

In the foregoing configuration, the display control device causes the display device to display a plurality of blocks marked with the color with which the order is identifiable are identifiable from each other in the Gantt chart.

Accordingly, it is possible to obtain the advantageous effect that the display control device can cause the display device to display the plurality of blocks each representing the work time of each product in the Gantt chart in which the implementation statuses of the work processes are classified for each order in a state in which the blocks are identifiable.

The display control device according to the aspect of the present invention may further include a third display control part configured, when there is a user manipulation of selecting a specific order among the plurality of orders, to cause the display device (A) to display only the Gantt chart related to the product included in the specific order, or to cause the display device (B) to highlight and display the Gantt chart related to the product included in the specific order with respect to the Gantt chart related to the product included in the order other than the specific order.

In the foregoing configuration, the display control device executes the following process when a user manipulation of selecting the specific order is received. That is, the display control device causes the display device (A) to display only the Gantt chart related to the product included in the specific order. Alternatively, the display control device causes the display device (B) to highlight and display the Gantt chart related to the product included in the specific order with respect to the Gantt chart related to the product included in the order other than the specific order.

Accordingly, it is possible to obtain the advantageous effect that the display control device causes the display device to display the Gantt chart indicating the work time of each of the plurality of products included in any order desired by the user in a state in which the Gantt chart is distinguished from another Gantt chart with regard to that order in a state in which the blocks are identifiable.

The display control device according to the aspect of the present invention may further include a fourth display control part configured, when there is a user manipulation of selecting a specific block among the plurality of blocks in a specific work process selected by the user among the plurality of work processes of the Gantt chart, to cause the display device to display detailed information which is related to a designated product and which includes at least one of (A) a starting time and an ending time of the work time represented by the specific block, (B) information indicating whether an error has occurred in the work time represented by the specific block, and (C) identification information for identifying the designated product which is the product corresponding to the specific block.

In the foregoing configuration, the display control device causes the display device to display the detailed information related to the designated product corresponding to the specific block when there is a user manipulation of selecting the specific block in the specific work process in the Gantt chart.

Here, the detailed information related to the designated product includes at least one of the (A) the starting time and the ending time of the work time represented by the specific block, (B) the information indicating whether an error has occurred in the work time represented by the specific block, and (C) the identification information for identifying the designated product.

Accordingly, it is possible to obtain the advantageous effect that the display control device causes the display device to display the detailed information related to the product corresponding to the block with regard to any block selected by the user in any work process selected by the user in response to a user manipulation.

The display control device according to the aspect of the present invention may further include a fifth display control part configured, when there is a user manipulation of requesting display of additional information in a state in which the fourth display control part displays the detailed information related to the designated product on the display device, to cause the display device to display the detailed information regarding each of one or more of the products included in the order including the designated product in a list format.

In the foregoing configuration, the display control device causes the display device to display the detailed information regarding of each of one or more of the products included in the order including the designated product in a list format when there is a user manipulation of requesting display of additional information.

Accordingly, it is possible to obtain the advantageous effect that the display control device allows the user to be able to check the detailed information regarding "each of one or more of the products included in the order including "the designated product corresponding to the block selected by the user"" at a glance.

The display control device according to the aspect of the present invention may further include a sixth display control part configured to cause the display device to highlight and display the block representing the work time at which an error has occurred in the Gantt chart.

In the foregoing configuration, the display control device causes the display device to highlight and display the block representing the work time at which an error has occurred in the Gantt chart.

Accordingly, it is possible to obtain the advantageous effect that the display control device causes the display device to highlight and display the block representing the work time at which an error has occurred in the Gantt chart and allows "the user to able to check the work time at which an error has occurred at a glance."

A control method of a display control device according to an aspect of the present invention is a control method of a display control device that causes a display device to display a Gantt chart indicating a work time required to complete each of a plurality of work processes for each product. The control method includes: an identification step of identifying each of a plurality of orders that each includes the same kind of one or more products; and a first display control step of marking a block representing the work time with a color with which the order including the product is identifiable and which is common to the plurality of work processes for the display device to display.

In the foregoing configuration, according to the control method, a block representing the work time of each product is marked with a color with which the order including the product is identifiable and which is common to the plurality of work processes and the display device is caused to display the Gantt chart.

The user can ascertain an implementation status of each order in the plurality of work processes at a glance in the Gantt chart in which the work time (the implementation status) of each product is indicated with the color of each order which is common to the plurality of work processes.

Accordingly, according to the control method, it is possible to obtain the advantageous effect that the display device is caused to display the Gantt chart capable of displaying the implementation status of the work process for each order by a display method called classification in which visibility is not compromised even when there are many orders.

The present invention is not limited to the above-described embodiments and various modifications can be made within the scope indicated in the claims. Embodiments obtained by appropriately combining technical means disclosed in different embodiments are also included in the technical scope of the present invention.

### [Reference Signs List]

10 Web server (display control device)
20 Display device
130 Identification part
141 First display control part
142 Second display control part
143 Third display control part
144 Fourth display control part
145 Fifth display control part
146 Sixth display control part
Ar Product
Bl Block
Or Order
Ot Work time
Pr Work process
S133 Identification step
137 First display control step

## Claims

1. A display control device that causes a display device to display a Gantt chart indicating a work time required to complete each of a plurality of work processes for each product, the display control device comprising:
an identification part configured to identify each of a plurality of orders that each includes a same kind of one or more products; and
a first display control part configured to mark a block representing the work time with a color with which the order including the product is identifiable and which is common to the plurality of work processes for the display device to display.

2. The display control device according to claim 1, further comprising:
a second display control part configured to cause the display device to display a plurality of blocks marked with the color with which the order is identifiable are identifiable from each other in the Gantt chart.

3. The display control device according to claim 1 or 2, further comprising:
a third display control part configured, when there is a user manipulation of selecting a specific order among the plurality of orders, to cause the display device
(A) to display only the Gantt chart related to the product included in the specific order, or
(B) to highlight and display the Gantt chart related to the product included in the specific order with respect to the Gantt chart related to the product included in an order other than the specific order.

4. The display control device according to claim 2, further comprising:
a fourth display control part configured, when there is a user manipulation of selecting a specific block among the plurality of blocks in a specific work process selected by the user among the plurality of work processes of the Gantt chart, to cause the display device to display detailed information which is related to a designated product and which includes at least one of (A) a starting time and an ending time of the work time represented by the specific block, (B) information indicating whether an error has occurred in the work time represented by the specific block, and (C) identification information for identifying the designated product which is the product corresponding to the specific block.

5. The display control device according to claim 4, further comprising:
a fifth display control part configured, when there is a user manipulation of requesting display of additional information in a state in which the fourth display control part displays the detailed information related to the designated product on the display device, to cause the display device to display the detailed information regarding each of one or more of the product included in the order including the designated product in a list format.

6. The display control device according to any one of claims 2, 4, and 5, further comprising:
a sixth display control part configured to cause the display device to highlight and display the block representing the work time at which an error has occurred in the Gantt chart.

7. A control method of a display control device that causes a display device to display a Gantt chart indicating a work time required to complete each of a plurality of work processes for each product, the control method comprising:
an identification step of identifying each of a plurality of orders that each includes a same kind of one or more products; and
a first display control step of marking a block representing the work time with a color with which the order including the product is identifiable and which is common to the plurality of work processes for the display device to display.

8. An information processing program causing a computer to function as the display control device according to any one of claims 1 to 6 and causing the computer to function as each of the parts.

9. A computer-readable recording medium on which the information processing program according to claim 8 is recorded.
